# FASCICULE DE BREVET EUROPEEN

(11) **EP 0 485 580 B1**
(45) Date de publication et mention de la délivrance du brevet: **04.05.1994**
(21) Numéro de dépôt: 91910961.1
(22) Date de dépôt: 11.06.1991
(51) Int. Cl.: B65D 90/16, B65D 90/18, B60P 1/64

(54) **STRUCTURE TELLE QU'UN CONTAINER OU UN ABRI MOBILE**
BEHÄLTER
A STRUCTURE SUCH AS A CONTAINER OR A MOBILE HUT

(30) Priorité: 11.06.1990 FR 9007237
(43) Date de publication de la demande: 20.05.1992
(73) Titulaire: MARREL, F-42161 Andrezieux-Boutheon Cedex (FR); GIAT Industries, F-78034 Versailles Cédex (FR)
(72) Inventeur: JANUEL, Bernard, F-42100 Saint-Etienne (FR); RAVILLY, Michel, Résidence SNI, La Forestière, F-35000 Rennes (FR)
(74) Mandataire: Rinuy, Santarelli
(86) Numéro de dépôt international: FR9100461
(87) Numéro de publication internationale: WO9119654

(56) Documents cités:
- DE-U- 8 808 247
- FR-A- 1 000 641
- FR-A- 1 572 733
- FR-A- 2 109 109
- FR-A- 2 358 352
- US-A- 1 990 118
- US-A- 4 911 318

## Description

L'invention a trait à une structure telle qu'un container ou un abri mobile, destinée à être chargée sur un véhicule muni d'un mécanisme de manutention à bras de levage hydraulique.

On sait que ces structures sont construites autour d'une ossature dont la partie inférieure comporte deux longerons qui dépassent sous les traverses afin de former des rails longitudinaux destinés à coopérer avec des galets de guidage situés à l'arrière du châssis du véhicule, ces longerons se prolongeant généralement sur la partie frontale de la structure par des montants entre lesquels est disposé à une certaine hauteur un axe de préhension ; que le bras de levage du mécanisme de manutention se présente sous la forme d'une potence articulée sur le châssis du véhicule, potence qui est télescopique (voir FR-A-2.109.109) et/ou articulée sur le châssis par l'intermédiaire d'un faux-châssis (voir US-A-4.911.318) ; et que pour charger une structure, on rétracte la potence et/ou on la pivote vers l'arrière par rapport au faux-châssis puis on fait basculer le bras vers l'arrière du véhicule, on engage un crochet que porte l'extrémité libre de la potence dans l'axe de préhension, et on fait basculer le bras vers l'avant, manoeuvre au cours de laquelle la structure est soulevée à l'avant, tirée vers le véhicule en restant inclinée, puis ses deux rails inférieurs viennent en contact avec les galets montés à l'arrière des longerons du véhicule, galets sur lesquels roulent ensuite les rails pendant que la structure continue à avancer en revenant à la position horizontale, puis on allonge la potence, et en fin de mouvement la structure repose sur les galets tandis qu'elle est supportée à l'avant par le crochet du bras, dont la partie horizontale se loge entre les rails.

La configuration du dessous de la strucutre (traverses sous lesquelles dépassent les longerons formant rail) pose parfois certaines difficultés, notamment lorsque la structure doit circuler sur un plancher de manutention à rouleaux ou à billes, du genre installé à bord des aéronefs, qui exigent de coopérer avec une surface plate et continue, de telle sorte qu'on doit installer la structure sur une palette dont la surface inférieure présente ces caractéristiques.

L'invention vise à réduire, voire à éviter, ce genre de difficultés.

Elle propose à cet effet une structure telle qu'un container ou un abri mobile, destinée à être chargée sur un véhicule muni d'un mécanisme de manutention à bras de levage hydraulique, comportant deux rails inférieurs longitudinaux destinés à coopérer avec des galets de guidage situés à l'arrière du véhicule, caractérisée en ce qu'elle comporte des moyens pour rendre mobile lesdits rails entre une position sortie leur permettant de coopérer avec lesdits galets de guidage, et une position escamotée où ils sont rentrés chacun dans un logement du fond de la structure de sorte qu'ils ne débordent pas du fond de la structure.

En rentrant les rails dans la position escamotée, on élimine les principales zones en saillie sous la structure, ce qui est particulièrement avantageux car la structure peut ainsi porter sur une surface plus importante, et exercer par conséquent une pression moins importante sur la surface sur laquelle elle repose, par exemple sur la palette à fond plat et continu ; et en outre on diminue ainsi la hauteur de la structure, ce qui permet notamment de la rendre conforme à un gabarit par rapport auquel les rails dépassent en position sortie.

Selon des caractéristiques préférées de l'invention, la structure comporte une sous-face sensiblement plane par rapport à laquelle les rails sont en saillie en position sortie, les rails et les logements étant adaptés en ce qu'en position escamotée chaque rail ferme son logement par une surface sensiblement coplanaire à la sous-face, la structure présentant alors une surface inférieure sensiblement plate et continue.

On notera que par surface "sensiblement plane et continue", on entend une surface capable de coopérer avec les planchers de manutention montés à bord des aéronefs, en particulier une surface conforme à la norme ISO 8323.

On peut ainsi, en position escamotée des rails, faire rouler directement la structure sur ces planchers de manutention, et notamment les plateaux de transfert à billes, ce qui permet d'économiser en poids puisqu'on n'a plus besoin d'utiliser une palette à fond plat et continu, tandis qu'on évite les contraintes liées au conditionnement de la structure sur une telle palette.

Dans un premier mode préféré de réalisation, la structure comporte pour chaque rail des moyens de montage à translation suivant un plan vertical, le long duquel le rail se translate pour passer de la position sortie à la position escamotée.

Les moyens pour rendre mobiles les rails sont ainsi obtenus d'une façon particulièrement simple, commode et économique.

Dans un deuxième mode préféré de réalisation de l'invention, la structure comporte pour chaque rail des moyens de montage à rotation autour d'un axe longitudinal, par rapport auquel le rail pivote pour passer de la position sortie à la position escamotée.

Par rapport à un escamotage des rails par translation parallèlement à eux-mêmes, cette solution offre l'avantage de demander un logement qui n'occupe dans le plancher de la structure qu'un faible encombrement en hauteur par rapport à celui des rails. En outre, dans le cas où la sous-face de la structure est adaptée à être plate et continue, il est avantageux de ne pas fermer le logement par la surface inférieure du rail qui risque de présenter des déformations du fait des sollicitations importantes auxquelles elle peut être soumise, mais par une surface latérale beaucoup moins sujette à de telles déformations.

Selon d'autres caractéristiques avantageuses de l'invention :
- la structure comporte à l'arrière deux rouleaux amovibles ou rétractables, facilitant le chargement ou le déchargement de la structure sur un sol stabilisé, ou son transfert sur remorque ou sur quai ;
- la structure comporte à l'avant deux sabots amovibles ou escamotables, adaptés à venir coopérer chacun avec un longeron du châssis du véhicule qui porte la structure pour en parfaire le verrouillage, notamment vis à vis des efforts transversaux.

L'exposé de l'invention sera maintenant poursuivi par la description d'un abri technique mobile conforme à l'invention, donnée ci-après à titre illustratif et non limitatif en référence aux dessins annexés, sur lesquels :
- la figure 1 est une vue schématique en perspective de cet abri ;
- les figures 2 à 6 sont des vues schématiques en coupe longitudinale, illustrant le déchargement de l'abri à partir d'un camion muni d'un mécanisme de manutention à bras de levage hydraulique, et la reconstitution d'un fond plat et continu pour cet abri ;
- la figure 7 est une vue schématique en élévation, illustrant le chargement de l'abri dans un aéronef ;
- la figure 8 est une vue partielle en coupe correspondant à la ligne VIII-VIII sur la figure 2, les demi-coupes de gauche et de droite illustrant respectivement la coopération des rails avec les deux types de galet de guidage que l'on rencontre dans la pratique ;
- la figure 9 est une vue partielle de dessous simplifiée de l'abri de la figure 1 ;
- la figure 10 est une vue partielle en coupe, correspondant sensiblement à la ligne X-X de la figure 9, et plus précisément à la ligne X-X de la figure 12 ;
- la figure 11 est une vue similaire à la figure 10, le rail étant en position escamotée ;
- la figure 12 est une vue partielle en coupe, correspondant à la ligne XII-XII de la figure 10 ;
- la figure 13 est une vue de dessus d'un ensemble intégré à l'abri de la figure 1, regroupant les rails, leurs logements, et les moyens pour les rendre mobiles entre la position sortie et la position escamotée ;
- la figure 14 est un agrandissement du coin supérieur droit de la figure 13 ;
- la figure 15 est une vue partielle en coupe correspondant à la ligne XV-XV de la figure 9 ;
- la figure 16 est une vue similaire, le rail étant en position escamotée ;
- les figures 16A et 16B illustrent d'une manière similaire aux figures 10 et 12, une variante qui diffère notamment par les moyens pour commander le pivotement des rails, la figure 16A étant une coupe prise selon la ligne A-A de la figure 16B, cette dernière étant une coupe prise selon la ligne B-B de la figure 16A ;
- les figures 16C et 16D montrent de la même façon une variante avec d'autres moyens pour commander le pivotement des rails, la figure 16C étant une coupe prise selon la ligne C-C de la figure 16D, cette dernièrc étant une coupe prise selon la ligne D-D de la figure 16C ;
- les figures 17 et 18 illustrent d'une façon similaire aux figures 10 et 11, une variante de réalisation des moyens pour rendre les rails mobiles ;
- la figure 19 est une vue frontale partielle de l'abri de la figure 1, montrant l'un des sabots dont il est muni ;
- la figure 20 est une vue partielle en coupe, correspondant à la ligne XX-XX de la figure 19, le sabot étant également montré en position relevée ;
- la figure 21 est une vue similaire à la figure 20, montrant le sabot en position verrouillée
- la figure 21A montre d'une manière similaire à la figure 19 une variante de sabot, verrouillé sur un premier type de longeron du véhicule ;
- la figure 21B montre de la même façon ce sabot verrouillé sur un deuxième type de longeron ;
- la figure 21C est une vue en plan expliquant la fixation du sabot sur l'abri ;
- les figures 22 et 23 sont des vues partielles, respectivement de dessous et de derrière de l'abri de la figure 1, montrant l'un des rouleaux dont il est muni à l'arrière
- les figures 24 et 25 sont des vues partielles en coupe correspondant respectivement à la ligne XXIV-XXIV sur la figure 25 et à la ligne XXV-XXV sur la figure 24, montrant la coopération de l'abri et des béquilles représentées sur les figures 4 à 6 ; et
- les figures 26 et 27 sont des vues similaires aux figures 24 et 25, montrant une variante dans la réalisation et le positionnement des béquilles.

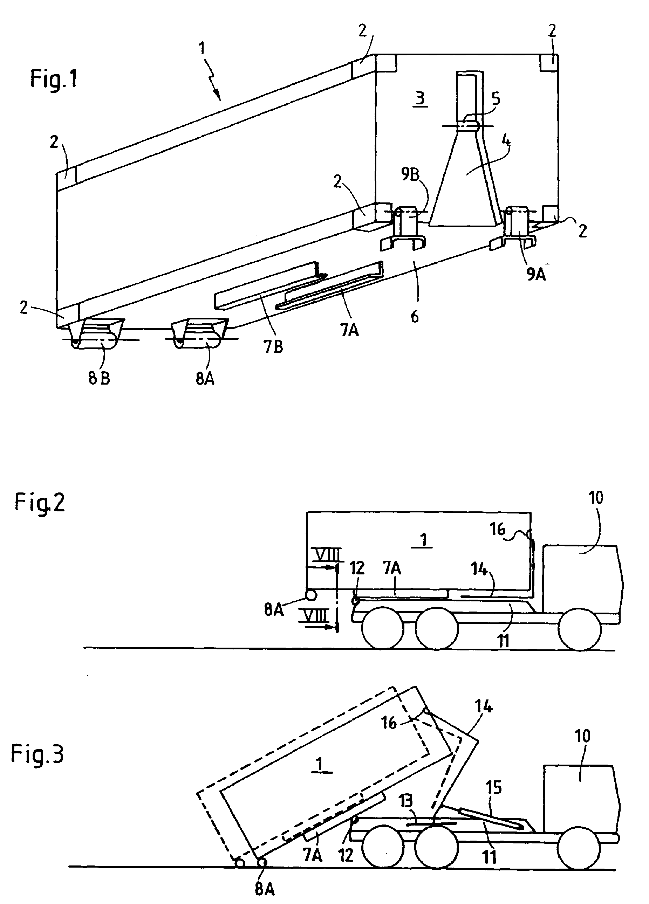

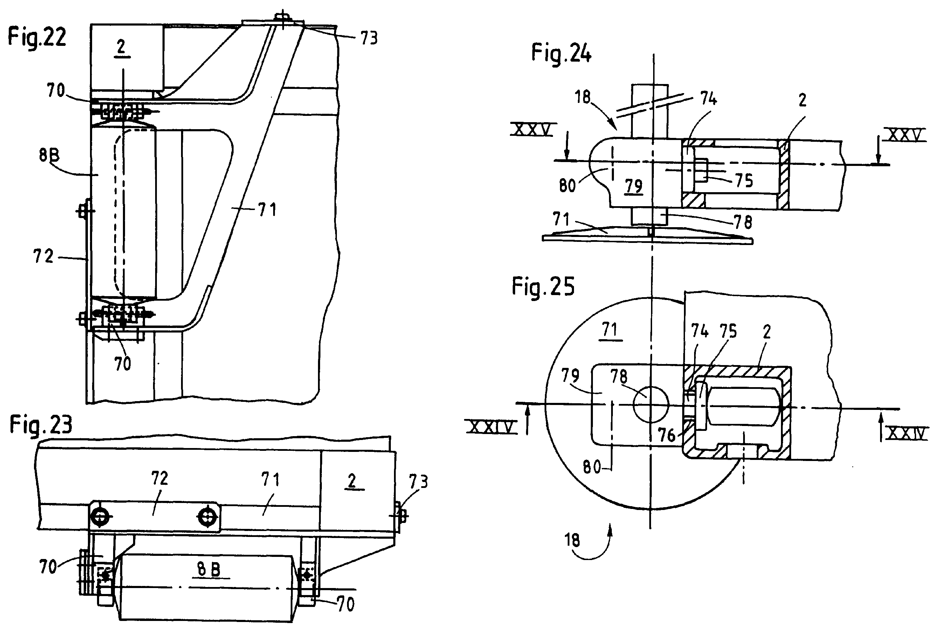

L'abri technique mobile 1 montré sur la figure 1 a la forme d'un caisson parallélépipédique normalisé (norme ISO), avec des coins creux 2 (dit "corner fitting" ou "coin ISO") dont chacune des trois faces extérieures est percée d'une ouverture allongée (voir figures 24 à 27), une face avant 3 présentant une niche 4 dans laquelle se trouve un axe de préhension 5, une sous-face 6 formant une surface plate sensiblement coplanaire à la base des coins 2 inférieurs, des rails inférieurs longitudinaux 7A et 7B, et des moyens (non visibles sur la figure 1) pour rendre mobiles les rails 7A et 7B entre une position sortie où ils sont en saillie par rapport à la sous-face 6 (position montrée sur la figure 1), et une position escamotée où ils sont rentrés chacun dans un logement du fond de la structure (non représentés sur la figure 1), les rails et les logements étant adaptés à ce que dans cette position chaque rail ferme son logement par une surface sensiblement coplanaire à la sous-face 6, l'abri présentant alors une surface inférieure sensiblement plate et continue. Deux rouleaux amovibles 8A et 8B sont en outre prévus sous l'abri, à l'arrière, tandis qu'à l'avant deux sabots escamotables 9A et 9B à section en U sont montés dans le prolongement des rails 7A et 7B.

La figure 2 montre cet abri chargé sur un camion 10 dont le châssis comporte deux longerons 11 situés de part et d'autre d'un axe médian, sur lesquels est monté un mécanisme de manutention à bras de levage hydraulique de type bien connu. Ainsi qu'on le voit plus particulièrement sur les figures 3 à 5, ce mécanisme comporte un ou plusieurs galets 12 à l'arrière de chaque longeron, un faux-châssis 13 articulé transversalement sur les longerons, une potence télescopique 14 articulée transversalement sur le faux-châssis et un couple de vérins hydrauliques 15 dont chacun est articulé transversalement à ses extrémités respectivement sur un des longerons 11 et sur la potence 14.

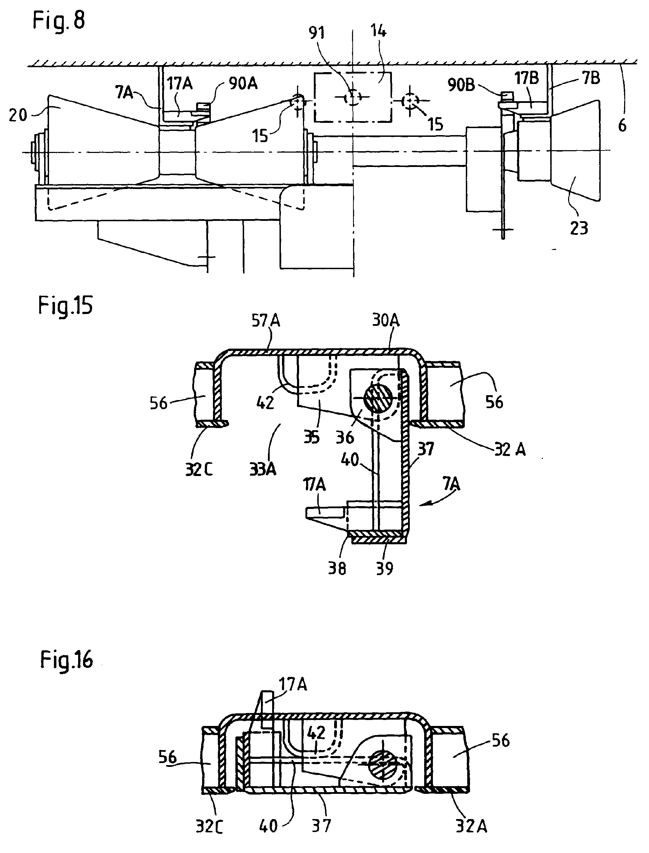

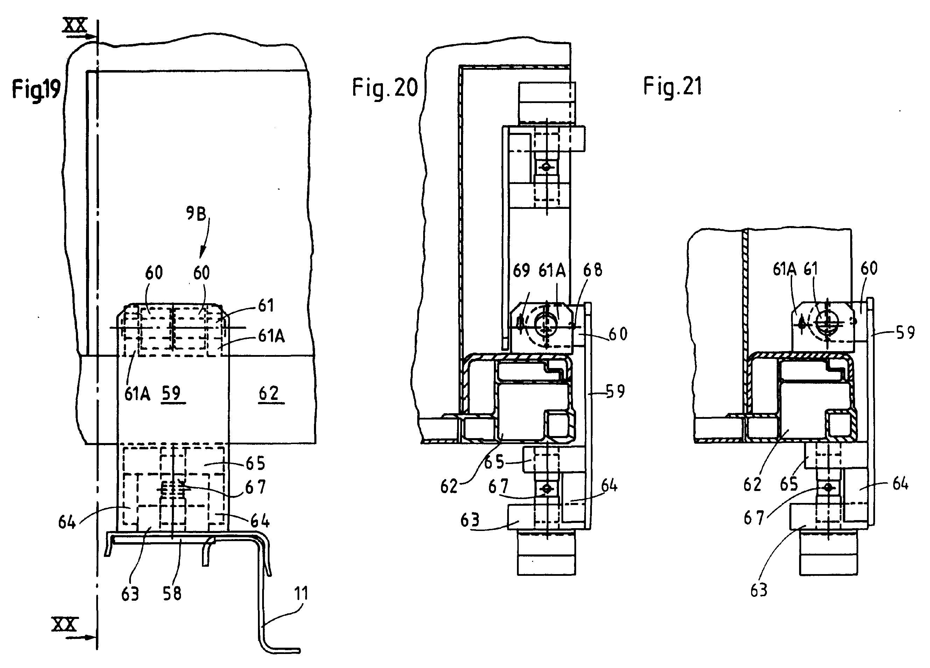

Dans la position de transport (figure 2), l'abri 1 repose par les rails 7A et 7B sur les rouleaux 12 tandis qu'il est supporté à l'avant par le crochet 16 que porte l'extrémité de la potence 14, qui est engagée dans l'axe de préhension 5. Le faux-châssis 13, qui se trouve entre les rails 7A et 7B, est muni de chaque côté d'un crochet bien connu 90A ou 90B (voir figure 8) dont l'encoche est orientée transversalement et s'ouvre vers l'arrière, et dans laquelle est engagé un doigt correspondant 17A ou 17B respectivement porté par le rail 7A et le rail 7B (voir figure 8), ces crochets et doigts permettant de positionner le centre de gravité de l'abri dans une position prédéterminée par rapport au camion, et de maintenir cette position, notamment lorsque des efforts de freinage importants s'exercent. En outre, comme on le verra plus loin à l'appui de la figure 19, chaque longeron 11 est coiffé par la partie en U d'un des sabots 9A et 9B, afin d'assurer un maintien de l'abri 1 sur le camion, notamment lorsque s'exercent des efforts latéraux importants, par exemple dans les virages.

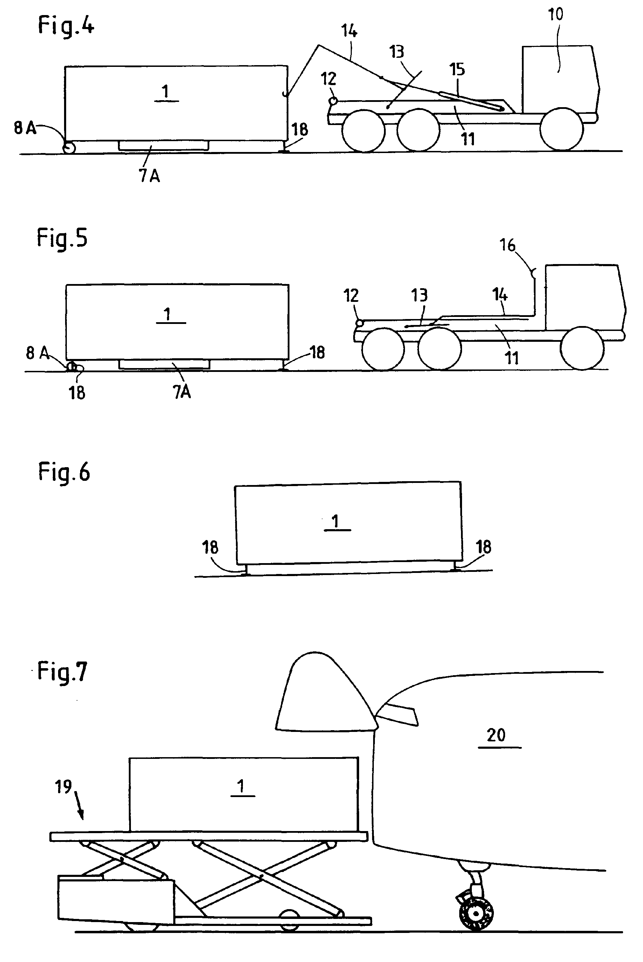

Lorsqu'on veut décharger l'abri 1 du camion 10, on relève les sabots 9A et 9B, on fait rentrer la tige du vérin 91 de la potence 14 afin de la rétracter et de faire glisser la structure 1 vers l'arrière du camion 10, mouvement au cours duquel les doigts 17A et 17B se dégagent des crochets 90A et 90B, puis on fait sortir la tige des vérins 15 pour faire basculer le bras de levage formé par la potence 14 et le faux-châssis 13, l'abri continue à reculer en roulant sur les galets 12 alors qu'il s'incline, les rouleaux 8A et 8B rentrent en contact avec le sol (figure 3), l'abri continue à rouler sur le sol en restant incliné, puis la potence arrive en butée sur le faux-châssis qui tourne alors autour de son articulation, l'abri, qui a suffisamment reculé, revient vers la position horizontale, et lorsque l'abri est entièrement en contact avec le sol (figure 4), le crochet 16 se dégage de l'axe 5, le camion avance un peu et peut repartir après avoir ramené le mécanisme de manutention à sa position de départ (figure 5).

En fait on a arrêté le mouvement du mécanisme de manutention entre les positions montrées sur les figures 3 et 4, et on a installé dans les coins 2 inférieurs avant des béquilles ou pieds de levage 18 (décrits plus loin à l'appui des figures 24 et 25) qui sont venus en contact avec le sol quand on a repris le mouvement du mécanisme de manutention, de sorte que l'on a évité que les rails 7A et 7B ne reposent sur le sol.

Ainsi qu'on le voit sur la figure 5, après avoir posé l'abri au sol, on installe deux autres béquilles 18 dans les coins inférieurs arrière, et on les manoeuvre pour lever l'abri de façon à ce qu'il ne repose que sur les béquilles 18. On peut alors démonter les rouleaux arrière 8A et 8B et escamoter les rails 7A et 7B pour rendre la surface inférieure de l'abri plate et continue (figure 6), c'est-à-dire sans aspérités, excroissances ou alvéoles importantes, afin qu'elle puisse circuler sur un plateau de transfert à billes sans l'endommager. A titre illustratif, on notera qu'en général ces billes ont un diamètre de 25,4 mm (1 inch) et que la distance entre billes est de 127 mm (5 inches).

Il est alors possible d'enlever les béquilles 18 et de charger l'abri 1 par des moyens conventionnels sur un élévateur 19 à système de rouleaux, qui permettra de charger l'abri dans un aéronef 20 dont le plancher est muni d'un plateau de transfert à billes, qui permet de faire circuler l'abri dans toutes les directions contenues dans un plan passant par le sommet des billes.

On notera qu'il est possible de faire reposer l'abri 1 sur le sol par les rails 7A et 7B, c'est-à-dire de ne monter les béquilles avant 18 qu'après sa dépose, mais qu'il est plus intéressant d'éviter le contact des rails avec le sol, car on empêche ainsi qu'ils ne collectent des souillures qui gêneraient leur escamotage tandis qu'elles pourraient s'accumuler dans les logements.

Plus généralement, on observera que les rails peuvent être escamotés directement pendant l'arrêt qu'on a effectué pour monter les béquilles avant 18, et qu'on peut également attendre cet arrêt pour escamoter les sabots 9A et 9B.

Bien entendu, lorsqu'on veut décharger l'abri d'un aéronef pour le charger sur un camion, on effectue les mêmes opérations mais en sens inverse.

Etant donné que l'opération de chargement débute généralement alors que la structure et le véhicule sur lequel elle doit être chargée ne sont pas centrés et alignés, les rouleaux disposés à l'arrière des mécanismes de manutention ont non seulement une fonction de roulage, mais aussi une fonction de centrage, procurée par une surface inclinée disposée du côté extérieur des rails. Dans la pratique, un premier type de galet (voir demi-coupe de gauche de la figure 8) se présente sous la forme d'un diabolo 20 à axe horizontal, assurant le roulage et le centrage ; tandis que dans un deuxième type (voir demi-coupe de droite), on utilise un galet 23 à axe horizontal avec, du côté intérieur, une surface cylindrique, et du côté extérieur une surface conique.

On va maintenant décrire plus en détail l'abri schématisé sur les figures 1 à 7.

On notera tout d'abord que les rails 7A et 7B sont très différents des longerons formant rails des structures classiques, notamment en ce qu'ils ne constituent pas un élément de l'ossature de l'abri, et qu'ils ont une longueur largement inférieure à celle de l'abri (par exemple un tiers de cette dernière).

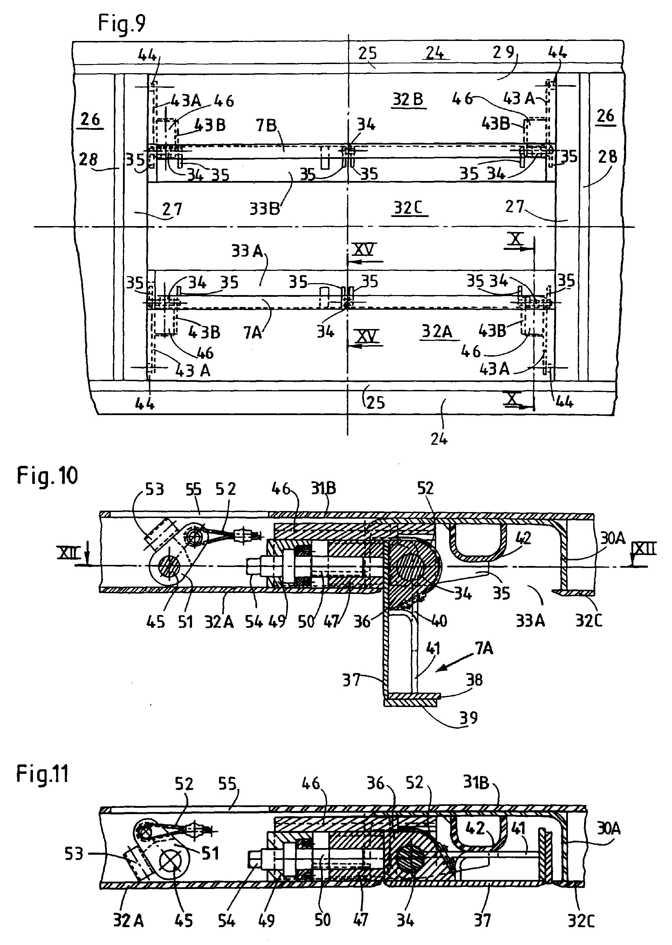

L'ossature de la partie inférieure de l'abri 1 (voir figure 9) comporte de chaque côté un longeron extérieur 24 formé par un profilé de section relativement importante, doublé du côté intérieur par un autre profilé 25 de plus petite section, deux plaques 26 étant disposées entre les longerons 25 et soudées à ces derniers ainsi qu'au reste de l'ossature de l'abri (non visible sur la figure 9), les faces inférieures des longerons 24 et 25 et des plaques 26 étant situées au même niveau. A l'endroit où doivent être disposés les rails 7A et 7B, on a prévu un espace creux rectangulaire limité par les longerons 25 et par des traverses 27 formées par un profilé similaire aux longerons 24, les traverses 27 étant doublées extérieurement par des traverses 28 de même nature que les longerons 25, les faces inférieures des traverses 27 et 28 étant situées au même niveau que celles des longerons 24 et 25 et des plaques 26.

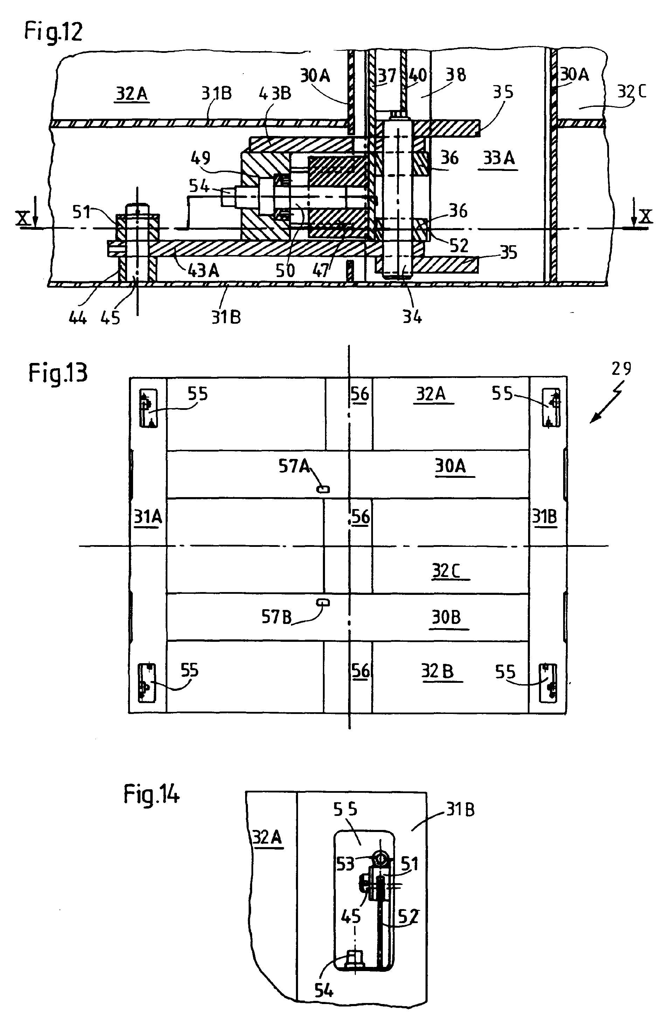

Dans cet espace creux, on a disposé un ensemble 29, montré en vue de dessus sur la figure 13, qui est soudé par ses bords au cadre formé par les traverses et longerons 25 et 27. Cet ensemble regroupe les rails, leurs logements et les moyens pour les rendre mobiles entre les positions sortie et rétractée. Il est formé par deux profilés longitudinaux en U 30A et 30B dont l'intérieur forme le logement pour respectivement le rail 7A et le rail 7B, par deux profilés transversaux d'extrémité à section en U 31A et 31B logeant les moyens de manoeuvre et de verrouillage des rails 7A et 7B, et trois plaques inférieures 32A, 32B et 32C ayant la même longueur que l'ensemble 29, plaques sur lesquelles sont soudés les profilés 30A, 30B, 31A et 31B, la face inférieure des plaques 32A, 32B et 32C étant au même niveau que le reste de la face inférieure de l'abri 1, cette face inférieure formant finalement une surface plate et continue, à l'exception des ouvertures 33A et 33B des logements des rails.

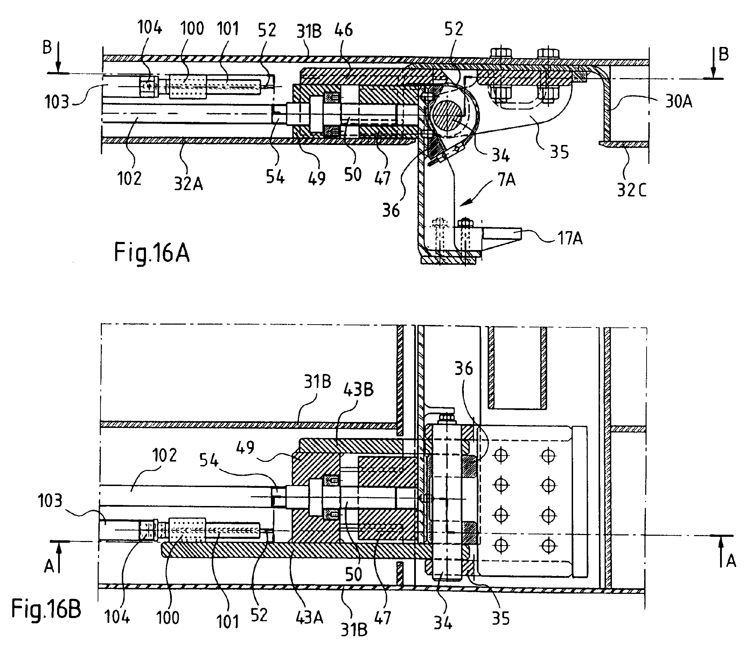

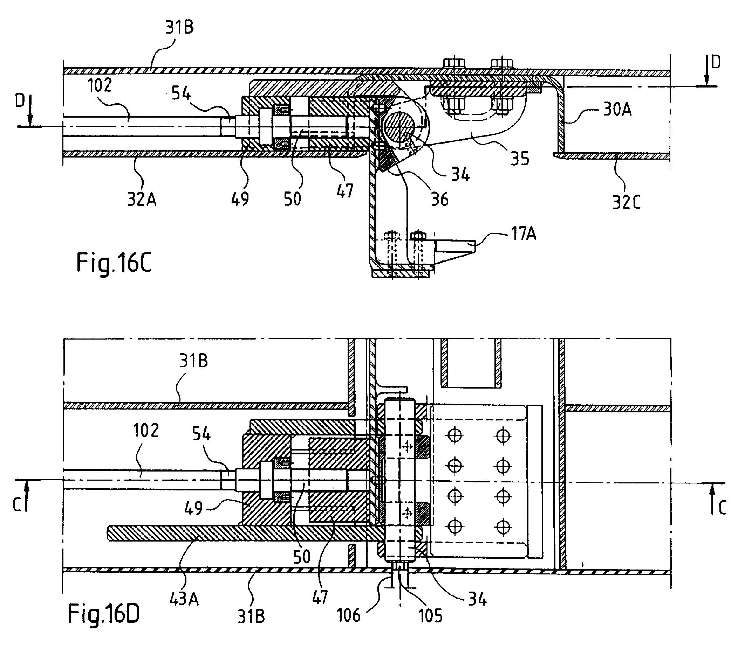

Dans chacun de ces logements, on a disposé un axe d'articulation 34 à chaque extrémité et au centre, ces axes 34 étant portés par un couple de pattes verticales 35 soudées à la partie horizontale des profilés 30A et 30B. Les axes 34 de chaque logement sont alignés sur un axe (géométrique) longitudinal commun, autour duquel est monté à rotation le rail 7A ou le rail 7B au moyen d'oreilles 36, le rail pivotant par rapport à cet axe longitudinal pour passer de la position sortie (figures 9, 10, 12 et 15) à la position escamotée (figures 11 et 16).

Chaque rail a une forme globalement en L dont la grande branche est formée par une plaque 37 et la petite branche par deux plaques 38 et 39, un profilé en L 40 de plus petite dimension joignant les plaques 38, 39 au bout opposé de la plaque 37, sauf à l'emplacement des oreilles 36 où on utilise un profilé 41 plus court. Une butée 42 formée par un profilé en U soudé à la partie supérieure du profilé 30A ou 30B, est prévue pour positionner correctement le rail 7A ou 7B en position escamotée, par venue en contact du profilé de renforcement 40 ou 41 (voir figures 11 et 16). On notera qu'en position escamotée, la plaque 37 ferme complètement l'ouverture 33A ou 33B, en se plaçant dans la continuité de la plaque 32C et de la plaque 32A ou 32B, un chanfreinage ou un arrondi étant prévu sur les bouts en regard de ces plaques, afin d'éviter toute arête vive susceptible d'endommager un plateau de transfert à billes sur lequel circule l'abri.

A chaque extrémité de l'ensemble 29, les axes 34 sont également portés par un couple de plaques verticales 43A, 43B soudées sur la plaque 32A (rail 7A) ou 32B (rail 7B), la plaque externe 43A se prolongeant à l'opposé de l'axe 34 et servant à porter, avec l'aide d'une bague 44 soudée sur la branche externe du profilé 31A ou 31B, un axe d'articulation 45, orienté parallèlement aux axes 34. Une plaque 46 est soudée au-dessus de la plaque 43B et de la partie de la plaque 43A qui lui fait face, de sorte que se trouve délimité un alésage à section carrée ou rectangulaire entre la plaque 32A ou 32B, les plaques 43A et 43B et la plaque 46. A l'intérieur de cet alésage, on a disposé un sabot 47 se présentant sous la forme d'un écrou de section correspondant à celle de l'alésage, et au bout extérieur de l'alésage, on a soudé une bride 49 de montage à rotation et de maintien axial d'une vis 50. Sur l'axe 45, on a monté un levier 51 relié par un câble 52 à l'une des oreilles 36, un petit bout de tube 53 étant soudé sur le levier 51 pour recevoir une tige permettant de le manoeuvrer.

Pour escamoter ou sortir les rails 7A ou 7B, on accède au levier 51 et à l'extrémité prismatique 54 de la vis 50 par une ouverture 55 ménagée dans le dessus des profilés 31A et 31B, l'opérateur se trouvant à l'intérieur de l'abri 1. Chaque rail s'escamote en agissant d'abord sur les vis 50 situées à ses extrémités, en engageant dans l'extrémité 54 de chacune de celles-ci une clé avec laquelle on la tourne pour faire reculer le sabot 47, et quand on a fait reculer les deux sabots, on engage dans le tube 53 une tige avec laquelle on fait basculer le levier 51, le câble 52 tirant alors sur le rail pour le faire pivoter vers la position escamotée, puis on fait tourner en sens inverse les vis 50 jusqu'à ce que le sabot 47 porte contre les oreilles 36, et en serrant vigoureusement pour verrouiller parfaitement le rail en position escamotée (figure 11). Pour sortir les rails, on fait basculer les leviers 51, ce qui détend les câbles 52, on tourne les vis 50 pour faire reculer suffisamment les sabots 47, les rails sortent alors sous l'effet de leur poids, et on tourne en sens inverse les vis 50 jusqu'à ce que le sabot 47 porte contre la plaque 37, en serrant vigoureusement pour verrouiller le rail en position sortie (figure 10).

Comme on le voit sur les figures 13, 15 et 16, l'ensemble 29 comporte également trois segments 56 de profilé en U, disposés transversalement au milieu de l'ensemble pour le renforcer, ces segments de renfort étant soudés sur les plaques 32A, 32B et 32C, ainsi que sur les profilés 30A et 30B. En outre, au niveau des doigts 17A et 17B, le dessus de ces derniers profilés est percé d'une ouverture, respectivement 57A et 57B, par laquelle passe le doigt en position escamotée du rail (voir figure 16). On notera, lorsqu'on sort les rails, que si ceux-ci ne basculent pas spontanément, on peut aider l'opération en agissant sur le bout du doigt qui dépasse au-dessus des ouvertures 57A et 57B.

Dans la variante montrée sur les figures 16A et 16B, le levier 51 articulé sur l'axe 45 est remplacé par un tube taraudé 100 soudé sur la plaque 43A et par une vis 101 qui coopère avec le tube 100 et avec le câble 52. La manoeuvre pour escamoter ou sortir les rails est similaire, mais au lieu de faire basculer le levier 51, on fait tourner la vis 101. Pour commander la rotation des vis 50 et 101, on a prévu des tubes de prolonge 102 et 103, qui sont engagés respectivement sur l'extrémité prismatique 54 de la vis 50 et sur l'extrémité prismatique 104 de la vis 101, l'autre extrémité de chaque tube de prolonge 102, 103 étant située sur un côté de l'abri, à partir duquel agit l'opérateur. On notera que l'ouverture 55, qui n'est plus utile, est supprimée, et qu'ici les doigts 17A et 17B ainsi que les oreilles 35 sont fixées par des boulons au lieu d'être soudées.

La variante montrée sur les figures 16C et 16D est similaire à celle qui vient d'être décrite à l'appui des figures 16A et 16B, mais il n'y a plus de câble 52 : une tête prismatique 105 est directement prévue sur l'axe 34, un tube de prolonge 106 étant engagé sur cette tête, et se poursuivant jusqu'à l'un des côtés de l'abri. On notera que dans cette variante, le rail peut basculer en position sortie non seulement sous l'effet de son poids, mais aussi grâce à un couple transmis par le tube 106.

Dans d'autres variantes non représentées, où est supprimé le levier 51, l'opérateur agit directement en tirant sur les deux câbles 52, qui peuvent aussi être remplacés par un câble ou une sangle unique, disposé au milieu du rail.

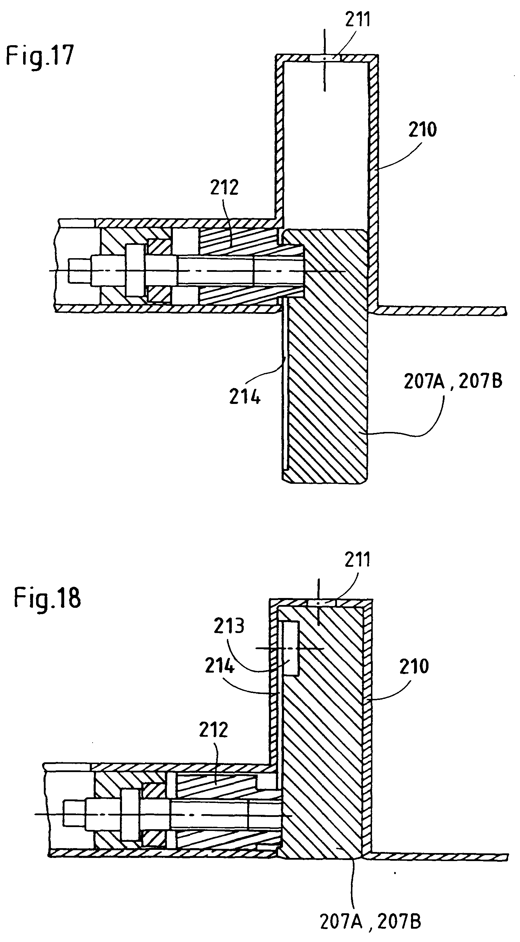

On va maintenant décrire à l'appui des figures 17 et 18, une variante des moyens pour rendre mobiles les rails entre les positions sortie et escamotée, où les rails 207A et 207B sont montés à translation suivant un plan vertical, le long duquel le rail se translate pour passer de la position sortie (Figure 17) à la position escamotée (Figure 18).

Chaque rail est monté dans des glissières 210 intégrées dans le fond de l'abri 1, formées plus précisément par les parois du logement du rail. Sur le dessus du logement, un orifice 211 est prévu pour faire passer la tige ronde d'un organe de levage du genre cric, le bout de cette tige étant muni d'un doigt transversal ovale qu'on fait rentrer dans un orifice de section correspondante du rail afin que la tige soit verrouillée au rail après qu'on l'ait fait tourner d'environ un quart de tour, l'organe de levage servant à relever le rail à partir de l'intérieur de la structure.

Pour immobiliser et guider le rail, un sabot 212 est mobile transversalement grâce à un mécanisme d'entraînement du même type que pour le sabot 47 (voir Figures 10 et 11), le sabot s'appliquant contre le rail pour le verrouiller dans chacune des positions sortie et escamotée, le rail étant muni d'un évidement 213 dans lequel s'engage le sabot en position sortie (Figure 17), et d'une rainure 214 dans laquelle coulisse le bout du sabot quand on déplace le rail, chaque extrémité de la rainure 214 formant une butée pour le sabot, correspondant respectivement à la position sortie et à la position escamotée.

Pour obtenir un positionnement plus précis du rail en position escamotée, on a prévu des butées réglables (non représentées).

Bien entendu, en fonction des circonstances, il est tout à fait possible de prévoir des moyens différents pour intégrer les rails et les moyens pour les rendre mobiles à une structure du genre de l'abri 1, et on peut notamment prévoir que la commande du mouvement des rails soit motorisée au lieu d'être manuelle et être centralisée plutôt qu'indépendante.

Comme on le voit sur la figure 19, chaque sabot avant 9A ou 9B comporte une partie inférieure à section en U, prévue pour accoster un longeron 11 par ses faces supérieure et intérieure, ou bien un longeron 58 d'une remorque sur laquelle est chargé l'abri ou la structure, par ses faces supérieure et extérieure.

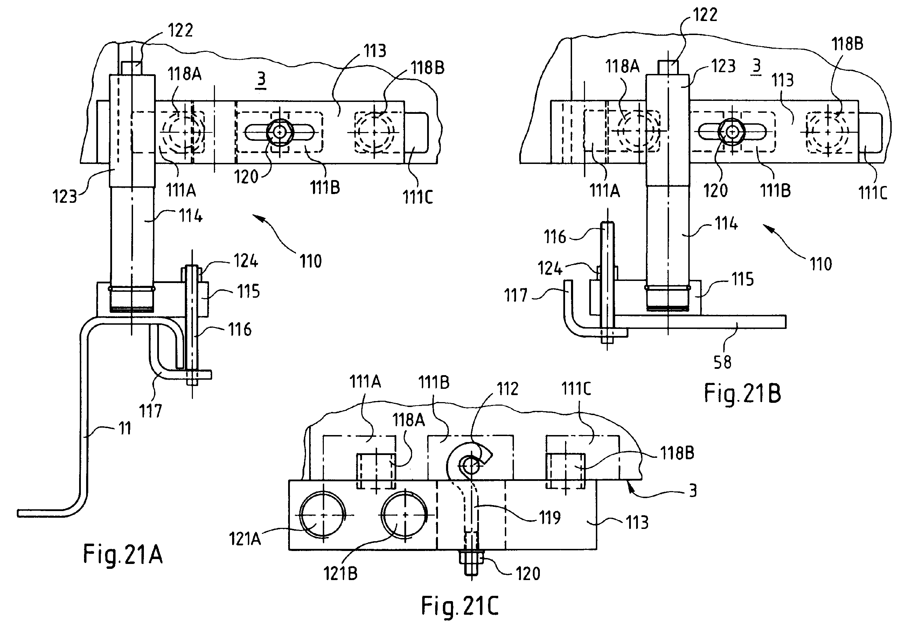

Chacun de ces sabots est formé qu'une plaque 59 comportant à une extrémité deux oreilles 60 solidaires d'un axe 61 maintenu dans des paliers verticaux 61A soudées au-dessus de la traverse inférieure avant 62 de l'abri 1, la partie en U du sabot est solidarisée à un manchon 63 fileté intérieurement et guidé entre des plaques verticales 64 soudées longitudinalement à la plaque 59, une plaque 65 est solidarisée aux plaques 59 et 64 et présente en partie centrale un filetage intérieur, et une tige 67 coopère par ses filetages d'extrémité avec les filetages du manchon 63 et de la plaque 65, ces filetages étant respectivement à droite et à gauche de sorte qu'en faisant tourner la tige on fait coulisser le manchon 63 dans les plaques 64, ce qui permet à la partie en U du sabot de s'appuyer contre le longeron, par exemple 11, du véhicule tandis que la plaque 65 s'appuie contre la traverse 62, le sabot 9A ou 9B étant alors en position verrouillée (Figure 21).

Au-dessus du sabot, se trouve un prolongement de la niche 4, dans lequel on peut loger le sabot en position rabattue (voir figure 20), dans laquelle les trous 68 et 69, pratiqués respectivement sur l'une des oreilles 60 et l'une des plaques 61A, viennent en regard l'un de l'autre, le sabot étant maintenu en position relevée par une goupille que l'on met en place dans ces trous.

Dans la variante montrée sur les figures 21A, 21B et 21C, les sabots 9A et 9B avec une partie en U sont remplacés par un ensemble de maintien 110, qui est amovible et non fixé à demeure avec une niche où loger le sabot en position relevée : ici, la face avant de l'abri comporte simplement de chaque côté dans sa partie basse, une série de trois creux parallèlépipédiques côte à côte, respectivement 111A, 111B et 111C, un axe vertical 112 étant fixé dans le creux milieu 111B ; l'ensemble 110 comportant une platine 113 qui se fixe grâce aux creux 111A, 111B et 111C et à l'axe 112, une tige verticale 114 qui coopère par filetage avec la platine 113, une semelle 115 montée pivotante au bout inférieur de la tige 114, une vis verticale 116 qui coopère avec la semelle 115, et une cornière 117 montée pivotante au bout de la vis 116.

La platine 113 comporte pour sa fixation deux broches circulaires 118A et 118B dont le diamètre extérieur correspond à la hauteur des creux 111A et 111C, l'écartement de ces derniers correspondant à l'écartement entre les broches 118A et 118B, de sorte que le seul degré de liberté qui reste quand les broches 118A et 118B sont respectivement dans les creux 111A et 111B, est une translation suivant l'axe des broches. Pour compléter le verrouillage sur l'abri, la platine 113 comporte également un crochet 119 qu'on met en prise sur l'axe 112, le blocage s'effectuant en serrant l'écrou 120 situé à l'opposé de la partie courbée du crochet (voir notamment la figure 21C). Pour coopérer avec la tige 114, la platine 113 comporte deux alésages taraudés 121A et 121B, l'un ou l'autre de ceux-ci étant choisi en fonction des circonstances.

La tige114 comporte une tête 122 prismatique pour sa manoeuvre, une partie filetée 123 pour coopérer avec l'alésage 121A ou 121B, et au bout opposé, un montage à pivotement de la semelle 115, dans laquelle est prévu un trou lisse coaxialement auquel est soudé un écrou 124 pour la vis 116.

Lorsque l'abri est transporté sur un véhicule avec des longerons 11 (voir figure 21A), on met en place la tige 114 dans l'alésage 121A, on dispose la semelle 115 avec la vis 116 du côté intérieur, et on fait porter le bout supérieur de la cornière 117 contre la face inférieure de la partie horizontale du longeron 11.

Lorsque l'abri est transporté sur un véhicule avec des longerons 58, notamment une remorque (voir figure 21B), la tige 114 est mise en place dans l'alésage 121B, la semelle 115 est disposée avec la vis 116 du côté extérieur, et on fait porter le bout de la partie horizontale de la cornière 117 sous le longeron 58.

On notera que la vis 116 de chaque ensemble 110 procure un blocage latéral de l'abri, et qu'en outre le serrage du longeron entre la semelle 115 et la cornière 117 procure un maintien vertical.

Ce maintien vertical est avantageux, car il évite au cours du transport des chocs qui peuvent être suffisamment importants pour créer sur la surface inférieure de l'abri un poinçonnage nuisible à la capacité de l'abri à rouler directement sur un plancher à billes du type avion.

On observera enfin que le dispositif d'accostage aux longerons qui vient d'être décrit à l'appui des figures 21A, 21B et 21C, est susceptible d'être utilisé sur des structures de type différent, et notamment sans rails mobiles entre une position sortie et une position escamotée.

On va maintenant décrire le rouleau amovible arrière 8B et ses moyens de montage, à l'appui des figures 22 et 23, le rouleau 8A étant similaire.

Le rouleau est monté à rotation sur des pattes verticales 70 qui se raccordent avec des nervures de renforcement à une sorte de fourche plate horizontale 71 qui porte à son tour deux languettes verticales 72 et 73, respectivement vissées en partie basse aux faces arrière et de côté de l'abri 1, au-delà du coin 2 qu'elles laissent dégagé, ce qui offre l'avantage de le laisser disponible, notamment pour mettre en place les béquilles 18.

On voit sur les figures 24 et 25, un exemple des béquilles ou pieds de levage 18 qu'on peut installer dans les coins 2 au moyen d'un système classique de came allongée en deux parties 74 et 75, qu'on fait tourner de 90° pour verrouiller la béquille, qui a sensiblement la constitution d'un cric, avec un pied circulaire d'appui au sol 71, monté au bout d'une tige 78 du mécanisme démultiplicateur 79 que l'on manoeuvre avec une manivelle au niveau de l'axe 80.

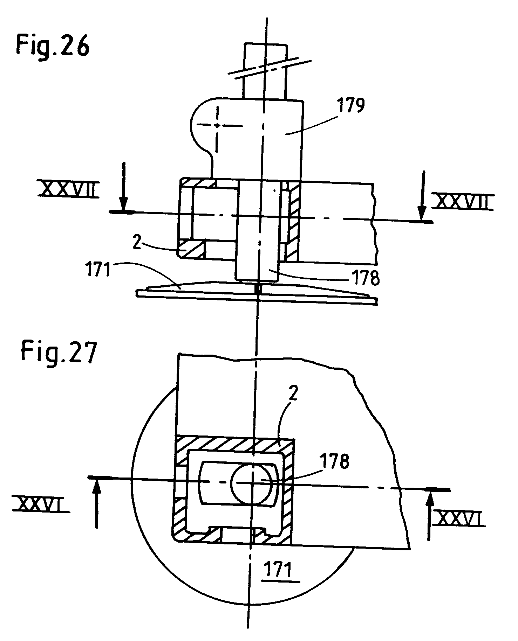

Dans la variante montrée sur les figures 26 et 27, le mécanisme démultiplicateur 179 est installé à demeure au-dessus du coin 2 dans une niche prévue à cet effet, et sa tige 178 passe à travers les ouvertures du coin 2, le pied 171 étant simplement inséré au bout de cette tige, de sorte qu'on peut relever la tige 178 suffisamment pour dégager l'ouverture inférieure et l'intérieur du coin 2.

De préférence, on prévoît dans l'abri des logements de stockage des rouleaux arrière 8A et 8B, et des béquilles 18 si elles sont réalisées conformément aux figures 24 et 25, ou bien des pieds 171 si les béquilles sont réalisées comme sur les figures 26 et 27.

Bien naturellement, en fonction des circonstances, on peut également prévoir des sabots avant amovibles au lieu d'escamotables, ou bien des rouleaux escamotables au lieu d'être amovibles, par exemple les rouleaux décrits dans le brevet français 2.358.352, en prévoyant des couvercles de fermetures de l'ouverture du logement des rouleaux.

En outre, on observera que les caractéristiques de l'invention peuvent être mis en oeuvre dans des structures destinées à être chargées sur un véhicule muni d'un mécanisme de manutention à bras de halage qui sont différentes de l'abri 1, notamment un container, les palettes normalisées IATA et ATA, et des caisses mobiles.

## Revendications

1. Structure telle qu'un container ou un abri mobile, destinée à être chargée sur un véhicule (10) muni d'un mécanisme de manutention à bras de levage hydraulique (12 à 15), comportant deux rails inférieurs longitudinaux destinés à coopérer avec des galets de guidage situés à l'arrière du véhicule, caractérisée en ce qu'elle comporte des moyens pour rendre mobile lesdits rails (7A, 7B) entre une position sortie leur permettant de coopérer avec lesdits galets de guidage (12), et une position escamotée où ils sont rentrés chacun dans un logement du fond de la structure de sorte qu'ils ne débordent pas du fond de la structure.

2. Structure selon la revendication 1, caractérisée en ce qu'elle comporte une sous-face (6) sensiblement plane par rapport à laquelle les rails (7A, 7B) sont en saillie en position sortie, les rails et les logements étant adaptés en ce qu'en position escamotée chaque rail ferme son logement par une surface sensiblement coplanaire à la sous-face, la structure présentant alors une surface inférieure sensiblement plate et continue.

3. Structure selon l'une quelconque des revendications 1 ou 2, caractérisée en ce qu'elle comporte pour chaque rail (207A, 207B) des moyens (210) de montage à translation suivant un plan vertical, le long duquel le rail se translate pour passer de la position sortie à la position escamotée.

4. Structure selon la revendication 3, caractérisée en ce qu'elle comporte pour chaque rail des glissières (210) de guidage en translation, et un sabot (212) mobile transversalement grâce à un mécanisme d'entraînement, le sabot s'appliquant contre le rail pour le verrouiller dans chacune des positions sortie et escamotée, le rail étant muni d'un évidement (213) dans lequel s'engage le sabot en position sortie, et d'une rainure (214) dans laquelle coulisse le bout du sabot quand on déplace le rail, chaque extrémité de cette rainure formant une butée pour le sabot, correspondant respectivement à la position sortie et à la position escamotée.

5. Structure selon l'une quelconque des revendications 1 ou 2, caractérisée en ce qu'elle comporte pour chaque rail des moyens de montage à rotation (34, 36) autour d'un axe longitudinal, par rapport auquel le rail pivote pour passer de la position sortie à la position escamotée.

6. Structure selon la revendication 5, caractérisée en ce qu'elle comporte des moyens (51, 52 101, 52 ; 105) pour faire pivoter chaque rail autour dudit axe longitudinal, et des moyens (47, 50) pour le verrouiller respectivement en position sortie et en position escamotée.

7. Structure selon la revendication 6, caractérisée en ce que les moyens pour verrouiller le rail comportent un sabot (47) mobile transversalement grâce à un mécanisme d'entraînement (49, 50), le sabot (47) s'appliquant contre le rail pour le verrouiller dans chacune des positions sortie et escamotée.

8. Structure selon l'une quelconque des revendication 4 ou 7, caractérisée en ce que le mécanisme d'entraînement comporte un alésage dans lequel est mobile le sabot (47, 212) et une vis (50) pour déplacer le sabot.

9. Structure selon la revendication 7 ou la revendication 8 prise en combinaison avec la revendication 7, caractérisée en ce que les moyens pour faire pivoter le rail comportent un levier (51) articulé autour d'un axe longitudinal, relié au rail par un câble transversal (52), et muni de moyens de prise (53) pour un organe de manoeuvre.

10. Structure selon la revendication 7 ou la revendication 8 prise en combinaison avec la revendication 7, caractérisée en ce que les moyens pour faire pivoter le rail comportent une vis (101) coopérant avec un tube taraudé fixe (100), la vis (100) étant reliée au rail par un câble (52), des moyens de prolonge (102, 103) étant prévus pour commander depuis l'extérieur la vis (100) d'entraînement du câble, et une vis (50) pour déplacer le sabot.

11. Structure selon la revendication 7 ou la revendication 8 prise en combinaison avec la revendication 7, caractérisée en ce que les moyens pour faire pivoter le rail comportent une tête prismatique (105) disposée sur un axe de pivotement (34) du rail, des moyens de prolonge (102, 106) étant prévus pour commander depuis l'intérieur l'axe de pivotement (34) et une vis (50) pour déplacer le sabot.

12. Structure selon l'une quelconque des revendications 1 à 11, caractérisée en ce que les rails de guidage (7A, 7B) ont une longueur inférieure à celle de la structure.

13. Structure selon l'une quelconque des revendications 1 à 12, caractérisée en ce que les rails (7A, 7B), leurs logements, et lesdits moyens pour les rendre mobiles sont réunis dans un ensemble (29) intégré par ses bords à un cadre que comporte l'ossature de la structure.

14. Structure selon la revendication 13, caractérisée en ce que ledit ensemble comporte deux profilés longitudinaux en U (30A, 30B) dont l'intérieur forme le logement du rail, deux profilés transversaux d'extrémité à section en U (31A, 31B) logeant les moyens pour rendre mobiles les rails, et trois plaques inférieures (32A, 32B, 32C) ayant la largeur de l'ensemble, bordant d'un bout à l'autre les ouvertures (33A, 33B) des logements de rails.

15. Structure selon l'une quelconque des revendications 1 à 14, caractérisée en ce que des doigts de verrouillage transversaux (17A, 17B) sont prévus sur chaque rail, afin de coopérer avec un crochet (90A, 90B) du faux-châssis (13).

16. Structure selon l'une quelconque des revendications 1 à 15, caractérisée en ce qu'elle comporte à l'arrière deux rouleaux (8A, 8B) amovibles ou rétractables.

17. Structure selon l'une quelconque des revendications 1 à 16, caractérisée en ce qu'elle comporte à l'avant deux sabots (9A, 9B) amovibles ou escamotables, adaptés à coopérer chacun avec un longeron (11, 58) du châssis du véhicule qui porte la structure.

## Patentansprüche

1. Struktur, wie ein Container oder ein beweglicher Schutzraum, die dazu bestimmt ist, auf ein Fahrzeug (10) aufgeladen zu werden, das mit einem Handhabungsmechanismus mit hydraulischem Hubarm (12 bis 15) versehen ist, und die zwei in Längsrichtung verlaufende untere Schienen zum Zusammenwirken mit hinten am Fahrzeug sitzenden Führungsrollen aufweist, **dadurch gekennzeichnet,** daß sie Mittel zum Verfahren besagter Schienen (7A, 7B) zwischen einer Ausfahrstellung, die ihnen ein Zusammenwirken mit besagten Führungsrollen (12) gestattet, und einer eingezogenen Stellung aufweist, in der jede Schiene in eine Aufnahme am Boden der Struktur so eingefahren ist, daß sie nicht über den Boden der Struktur hinausragt.

2. Struktur nach Anspruch 1, dadurch gekennzeichnet, daß sie mit einer im wesentlichen ebenen Unterseite (6) verbunden ist, über welche die Schienen (7A, 7B) in Ausfahrstellung vorragen, wobei die Schienen und die Aufnahmen so aneinander angepaßt sind, daß in eingefahrener Stellung jede Schiene ihre Aufnahme durch eine im wesentlichen zur Unterseite komplanare Fläche verschließt, wodurch die Struktur dann eine untere, im wesentlichen ebene sowie durchgehende Fläche aufweist.

3. Struktur nach einem der Ansprüche 1 oder 2, dadurch gekennzeichnet, daß Einbaumittel (240) für jede Schiene (207A, 207B) vorgesehen sind, die deren Verschiebung längs einer vertikalen Ebene gestatten, längs derer die Schiene zum Übergang von der Ausfahrstellung in die eingefahrene Stellung verschiebbar ist.

4. Struktur nach Anspruch 3, dadurch gekennzeichnet, daß sie für jede Schiene Gleitschienen (210) zur Führung bei der Verschiebung und einen Schuh (212) aufweist, der über einen Antriebsmechanismus querbeweglich ist, wobei der Schuh auch gegen die Schiene aufdrückbar ist, um diese sowohl in der Ausfahr-, wie auch in der eingefahrenen Stellung zu verriegeln, und wobei die Schiene mit einer Vertiefung (213), in die der Schuh in der Ausfahrstellung eingreift, sowie mit einer Nut (214) versehen ist, in der das Ende des Schuhs beim Verschieben der Schiene gleitet, wobei jedes Ende der Nut für den Schuh einen Anschlag ausbildet, der jeweils der Austfahrstellung und der eingefahrenen Stellung entspricht.

5. Struktur nach einem der Ansprüche 1 oder 2, dadurch gekennzeichnet, daß Einbaumittel für jede Schiene vorgesehen sind, die ein Verdrehen (34, 36) um eine Längsachse zum Verschwenken der Schiene von deren Ausfahrstellung in deren eingefahrene Stellung gestatten.

6. Struktur nach Anspruch 5, dadurch gekennzeichnet, daß sie Mittel (51, 52; 101, 52; 105) zum Verschwenken jeder Schiene um besagte Längsachse sowie Mittel (47, 50) aufweist, um die Schiene jeweils in Ausfahrstellung und in eingefahrener Stellung zu verriegeln.

7. Struktur nach Anspruch 6, dadurch gekennzeichnet, daß die Mittel zum Verriegeln der Schiene einen Schuh (47) umfassen, der über einen Antriebsmechanismus (49, 50) querbeweglich ist, wobei der Schuh auch gegen die Schiene andrückbar ist, um diese in der Ausfahr- wie auch in der eingefahrenen Stellung zu verriegeln.

8. Struktur nach einem der Ansprüche 4 oder 7, dadurch gekennzeichnet, daß der Antriebsmechanismus eine Bohrung, in welcher der Schuh (47, 212) beweglich ist, und eine Schraube (50) zum Verschieben des Schuhs aufweist.

9. Struktur nach Anspruch 7 oder Anspruch 8 in Verbindung mit Anspruch 7, dadurch gekennzeichnet, daß die Mittel zum Verschwenken der Schiene einen Hebel (51) umfassen, der um eine Längsachse verschwenkbar und mit der Schiene über ein querverlaufendes Seil (52) verbunden sowie mit Mitteln (53) zum Ergreifen durch ein Betätigungsorgan versehen ist.

10. Struktur nach Anspruch 7 oder Anspruch 8 in Verbindung mit Anspruch 7, dadurch gekennzeichnet, daß die Mittel zum Verschwenken der Schiene eine Schraube (101), die mit einem feststehenden Gewinderohr (100) zusammenwirkt und mit der Schiene über ein Seil (52) verbunden ist, wobei Verlängerungsmittel (102, 103) vorgesehen sind, um die Schraube (100) zum Zug am Seil von außen zu betätigen, sowie eine Schraube (50) zum Verschieben des Schuhs aufweisen.

11. Struktur nach Anspruch 7 oder Anspruch 8 in Verbindung mit Anspruch 7, dadurch gekennzeichnet, daß die Mittel zum Verschwenken der Schiene einen prismatischen Kopf (105), der auf einer Verschwenkachse (34) der Schiene angeordnet ist, wobei Verlängerungsmittel (102, 106) zum Betätigen der Verschwenkachse (34) von innen vorgesehen sind, und eine Schraube (50) zum Verschieben des Schuhs aufweisen.

12. Struktur nach einem der Ansprüche 1 bis 11, dadurch gekennzeichnet, daß die Führungsschienen (7A, 7B) eine Länge aufweisen, die kleiner als die der Struktur ist.

13. Struktur nach einem der Ansprüche 1 bis 12, dadurch gekennzeichnet, daß die Schienen (7A, 7B), ihre Aufnahmen sowie besagte Mittel für ihre Bewegungen in einer Baugruppe (29) zusammengefaßt sind, die über ihre Ränder in einen Rahmen eingebaut ist, der das Traggerüst der Struktur umfaßt.

14. Struktur nach Anspruch 13, dadurch gekennzeichnet, daß die Baugruppe zwei in Längsrichtung verlaufende U-Profile (30A, 30B) aufweist, deren Innenraum die Aufnahme für die Schiene ausbildet, wobei zwei querverlaufende Endprofile (31A, 31B) mit U-förmigem Querschnitt die Mittel zum Bewegen der Schienen aufnehmen und drei untere Platten (31A, 32B, 32C), welche die Breite der Baugruppe aufweisen, die Öffnungen (33A, 33B) für die Aufnahmen der Schienen von einem Ende bis zum anderen einfassen.

15. Struktur nach einem der Ansprüche 1 bis 14, dadurch gekennzeichnet, daß querverlaufende Verriegelungsfinger (17A, 17B) auf jeder Schiene zum Zusammenwirken mit einem Haken (90A, 90B) des Hilfsrahmens (13) vorgesehen sind.

16. Struktur nach einem der Ansprüche 1 bis 15, dadurch gekennzeichnet, daß sie hinten zwei abnehmbare oder einziehbare Rollen (8A, 8B) aufweist.

17. Struktur nach einem der Ansprüche 1 bis 16, dadurch gekennzeichnet, daß sie vorne zwei abnehmbare oder hochklappbare Schuhe (9A, 9B) zum Zusammenwirken mit einem Längsträger (11, 58) des Fahrgestells des die Struktur tragenden Fahrzeugs aufweist.

## Claims

1. Structure such as a container or a mobile shelter adapted to be loaded onto a vehicle (10) provided with a hydraulic lifting arm type handling mechanism (12 through 15) comprising two longitudinal bottom rails adapted to cooperate with guide rollers at the rear of the vehicle, characterised in that it comprises means whereby said rails (7A, 7B) are rendered mobile between a deployed position in which they are able to cooperate with said guide rollers (12) and a retracted position in which each is withdrawn into a housing in the bottom of the structure so that they do not project from the bottom of the structure.

2. Structure according to claim 1 characterised in that it comprises a substantially plane undersurface (6) relative to which the rails (7A, 7B) project in the deployed position, the rails and the housings being adapted so that in the retracted position a surface of each rail substantially coplanar with the undersurface closes its housing, the structure then having a substantially flat and continuous bottom.

3. Structure according to claim 1 or claim 2 characterised in that it comprises for each rail (207A, 207B) mounting means (210) enabling movement in translation in a vertical plane in which the rail moves from the deployed position to the retracted position.

4. Structure according to claim 3 characterised in that it comprises for each rail translation movement guide slideways (210) and a shoe (212) movable transversely by a drive mechanism, the shoe being applied against the rail to lock it into each of the deployed and retracted positions, the rail being provided with an opening (213) in which the shoe is engaged in the deployed position and a groove (214) in which the end of the shoe slides when the rail is moved, each end of this groove forming an abutment for the shoe, one for the deployed position and one for the retracted position.

5. Structure according to claim 1 or claim 2 characterised in that it comprises for each rail mounting means enabling movement in rotation (34, 36) about a longitudinal axis about which the rail pivots from the deployed position to the retracted position.

6. Structure according to claim 5 characterised in that it comprises means (51, 52; 101, 52; 105) for pivoting each rail about said longitudinal axis and means (47, 50) for locking it in the deployed position and in the retracted position.

7. Structure according to claim 6 characterised in that the rail locking means comprise a shoe (47) movable transversely by a drive mechanism (49, 50), the shoe (47) being applied against the rail to lock it into each of the deployed and retracted positions.

8. Structure according to claim 4 or claim 7 characterised in that the drive mechanism comprises a bore in which the shoe (47, 212) moves and a screw (50) for moving the shoe.

9. Structure according to claim 7 or claim 8 in combination with claim 7 characterised in that the means for pivoting the rail comprise a lever (51) articulated about a longitudinal axis connected to the rail by a transverse cable (52) and provided with operating device engagement means (53).

10. Structure according to claim 7 or claim 8 taken in combination with claim 7 characterised in that the means for pivoting the rail comprise a screw (101) cooperating with a fixed screwthreaded tube (100) the screw (101) being connected to the rail by a cable (52), extension means (102, 103) being provided for operating the cable drive screw (100) from the outside and a screw (50) for moving the shoe.

11. Structure according to claim 7 or claim 8 in combination with claim 7 characterised in that the means for pivoting the rail comprise a prism-shape head (105) on a pivot shaft (34) of the rail, extension means (102, 106) being provided for operating the pivot shaft (34) from the inside and a screw (50) for moving the shoe.

12. Structure according to any one of claims 1 to 11 characterised in that the guide rails (7A, 7B) are shorter than the structure.

13. Structure according to any one of claims 1 to 12 characterised in that the rails (7A, 7B), their housings and said means whereby they are rendered mobile are combined in an assembly (29) integrated by its edges to a frame included in the framework of the structure.

14. Structure according to claim 13 characterised in that said assembly comprises two U-shape longitudinal sections (30A, 30B) whose interior forms the rail housing, two U-shape transverse end sections (31A, 31B) housing the means whereby the rails are rendered mobile and three bottom plates (32A, 32B, 32C) the same width as the assembly flanking from one end to the other the openings (33A, 33B) of the rail housings.

15. Structure according to any one of claims 1 to 14 characterised in that transverse locking fingers (17A, 17B) are provided on each rail to cooperate with a hook (19A, 19B) of the subframe (13).

16. Structure according to any one of claims 1 to 15 characterised in that it comprises two removable or retractable rollers (8A, 8B) at its rear end.

17. Structure according to any one of claims 1 to 16 characterised in that it comprises two removable or retractable shoes (9A, 9B) at its front end each adapted to cooperate with a longitudinal rail (11, 58) of the chassis of the vehicle which carries the structure.
